# EUROPEAN PATENT SPECIFICATION

(11) **EP 2 822 058 B1**
(45) Date of publication and mention of the grant of the patent: **20.04.2016**
(21) Application number: 14157270.1
(22) Date of filing: 28.02.2014
(51) Int. Cl.: H01M 2/02, H01M 2/16, H01M 10/04, H01M 10/0587, H01M 10/0525, H01M 10/058, H01M 2/04, H01M 2/14

(54) **Lithium pouch battery**
Lithiumbeutelbatterie
Batterie à poche de lithium

(30) Priority: 03.07.2013 KR 20130078002
(43) Date of publication of application: 07.01.2015
(73) Proprietor: Samsung SDI Co., Ltd., Yongin-si, Gyeonggi-do (KR)
(72) Inventor: Kim, Cheon-Soo, Gyeonggi-do (KR)
(74) Representative: Taor, Simon Edward William

(56) References cited:
- EP-A1- 2 273 601
- EP-A1- 2 375 472
- EP-A1- 2 477 252
- WO-A1-2007/061262
- WO-A1-2013/058367
- US-A1- 2011 206 971
- , 19 August 2015 (2015-08-19), XP055208597, Retrieved from the Internet: URL:http://www.asahi-kasei.co.jp/opsfilm/e n/pdf/opsfilm-spec.pdf [retrieved on 2015-08-19]
- Anonymous: "ASTM D882 - 12 Standard Test Method for Tensile Properties of Thin Plastic Sheeting", , 19 August 2015 (2015-08-19), XP055208604, Retrieved from the Internet: URL:http://www.astm.org/Standards/D882.htm [retrieved on 2015-08-19]

## Description

The present invention relates to a lithium pouch battery.

Lithium pouch batteries have recently drawn attention as a power source for a small portable electronic device. A lithium pouch battery uses an organic electrolyte and has a discharge voltage that can be at least twice as high as compared to that of a comparable battery using an alkali aqueous solution and accordingly, can have a relatively high energy density.

A lithium pouch battery is manufactured by housing an electrode assembly in a case, injecting an electrolyte solution into the case, and then, closing and sealing the case. The electrode assembly is formed by interposing a separator between positive and negative electrodes and spirally winding them into a jelly-roll shape.

The electrode assembly is typically finished with a finish material on the external cross section to fix the finished part and then housed in a case, and the case is sealed, after an electrolyte solution is injected into the case. Such a lithium pouch battery can be relatively weak against an external impact and may have deteriorated stability.

According to an aspect of the present invention, there is provided a lithium pouch battery according to claim 1. According to another aspect of the present invention, there is provided a method of forming a lithium pouch battery according to claim 9. Optional features are set out in the dependent claims.

An aspect of an embodiment of the present invention is directed toward a lithium pouch battery that is strong against an external impact and has excellent stability.

An embodiment provides a lithium pouch battery that includes an electrode assembly including a positive electrode, a negative electrode, and a separator interposed between the positive electrode and the negative electrode; and an oriented polystyrene (OPS) film attached to at least one external side (e.g., an outer surface) of the electrode assembly, wherein the separator includes a porous substrate and a coating layer formed on at least one side of the porous substrate, and the coating layer includes a polymer, a ceramic, or a combination thereof.

The oriented polystyrene film may be attached to the one external side of the electrode assembly with another external side thereof being open.

The electrode assembly has a jelly-roll shape formed by sequentially winding the positive electrode, the separator, and the negative electrode, and herein, the separator may be wound at least one time more than the positive and negative electrodes. The oriented polystyrene film may have stronger outer adherence than inner adherence.

The oriented polystyrene film may have adhesion strength of about 0.5 kgf/cm² to about 8 kgf/cm².

The oriented polystyrene film may have an elongation rate of about 10% to about 400%.

The polymer may include a polyvinylidene fluoride-based polymer, an acryl-based polymer, polymethylmethacrylate (PMMA), an aramid resin, a polyamideimide resin, a polyimide resin, or a combination thereof.

The polyvinylidene fluoride-based polymer may include polyvinylidene fluoride (PVdF), a polyvinylidene fluoride-hexafluoropropylene (PVdF-HFP) copolymer, or a combination thereof.

The ceramic may include Al₂O₃, MgO, TiO₂, Al(OH)₃, Mg(OH)₂, Ti(OH)₄, or a combination thereof.

The coating layer may have a thickness of about 0.1 µm to about 6 µm.

The lithium pouch battery may further include a pouch case for housing the electrode assembly; and an electrolyte injected into the pouch case.

The electrolyte may include C1 to C10 alkyl propionate.

Other embodiments are included in the following detailed description.

Here, in one embodiment, the lithium pouch battery is strong against an external impact and has excellent stability.
FIG. 1 is a schematic view showing a lithium pouch battery according to one embodiment.
FIG. 2 is a nonparametric survival plot showing free fall results of the lithium pouch battery cells according to Example 1 and Comparative Example 1.

Hereinafter, embodiments are described in more detail. However, these embodiments are exemplary, and this disclosure is not limited thereto. Expressions such as "at least one of," when preceding a list of elements, modify the entire list of elements and do not modify the individual elements of the list. Further, the use of "may" when describing embodiments of the present invention refers to "one or more embodiments of the present invention."

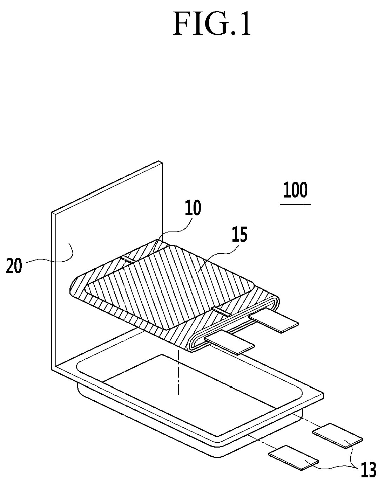

A lithium pouch battery according to one embodiment is described referring to FIG. 1.

FIG. 1 is a schematic view showing a lithium pouch battery according to one embodiment.

Referring to FIG. 1, a lithium pouch battery 100 according to one embodiment includes an electrode assembly 10, a finish material 15 attached to outside of the electrode assembly 10, a pouch case 20 housing the electrode assembly 10, and an electrode tab 13 playing a role of an electrical channel for externally inducing a current formed in the electrode assembly 10. Both sides of the pouch case 20 are overlapped and sealed. In addition, a electrolyte is injected into the pouch case 20 housing the electrode assembly 10.

The electrode assembly 10 includes a positive electrode, a negative electrode facing with the positive electrode, and a separator interposed between the positive and negative electrodes. The separator may include a porous substrate and a coating layer formed on at least one side of the porous substrate.

In addition, the electrode assembly 10 has a jelly-roll shape formed by sequentially winding the positive electrode, the separator, and the negative electrode. The finish material 15 may be an oriented polystyrene (OPS) film. The oriented polystyrene film has a low melting temperature and a low melt viscosity during the molding and thus, may be easily molded. Here, if the oriented polystyrene film is attached to outside of the electrode assembly, the oriented polystyrene film has adherence during a heat pressure event (i.e., when heat and pressure are applied) and may help to maintain or stabilize the jelly-roll shape of the spirally-wound electrode assembly. Furthermore, the oriented polystyrene film closely adheres the electrode assembly to the pouch case 20 and may reinforce a close-contacting force therebetween. Accordingly, the electrode assembly can stably maintain its jelly-roll shape against an external impact and can limit its movement in the pouch case 20.

When the electrode assembly has a transformed jelly-roll shape or is moved too much in the pouch case, a battery may have an internal short-circuit and thus, deteriorated performance. According to one embodiment, the electrode assembly may stably maintain a jelly-roll shape against an external impact and is suppressed from movement in the pouch case and thus, may prevent performance deterioration of a battery.

The oriented polystyrene film may have stronger outer adherence than inner adherence. In other words, the outer surface of the oriented polystyrene film may be more adhesive than the inner surface (i.e. the surface in contact with the electrode assembly).

The oriented polystyrene film may have adhesion strength of about 0.5 kgf/cm² to about 8 kgf/cm² and specifically, about 0.5 kgf/cm² to about 5 kgf/cm². When the oriented polystyrene film has adhesion strength within the range, excellent adherence may be obtained during the heat pressure event.

The oriented polystyrene film may have an elongation rate of about 10% to about 400% and specifically, about 50% to about 200%. When the oriented polystyrene film has an elongation rate within the range, excellent adherence may be obtained during the heat pressure event.

In one embodiment, when the oriented polystyrene film is attached to an external side of the electrode assembly, another external side of the electrode assembly is maintained to be open as an open side (i.e., a side exposed without the oriented polystyrene film). Specifically, the open side of the electrode assembly corresponds to a gas space where gas discharged from the pouch case flows through during a degasing process, and the oriented polystyrene film is attached while one side of the electrode assembly is open. The reason that the electrode assembly has an open side is to secure a path for discharging gas during the degas process.

The separator may include a porous substrate and a coating layer formed on at least one side of the porous substrate.

The porous substrate may include a polyolefin resin. Examples of the polyolefin resin may include a polyethylene-based resin, a polypropylene-based resin, or a combination thereof.

The coating layer may include a polymer, a ceramic, or a combination thereof.

The coating layer may also have adherence when the above-described finish material, specifically, an oriented polystyrene film is heat-pressed and accordingly, stabilize spirally-wound jelly-roll shape of the electrode assembly, so that the jelly-roll may not be unrolled. In this way, the electrode assembly may double-stably maintain a jelly-roll shape due to the oriented polystyrene film attached to the outside of the electrode assembly and the coating layer coated on the surface of the porous substrate.

The electrode assembly has a jelly-roll shape formed by sequentially winding the positive electrode, the separator, and the negative electrode, and herein, the separator is wound at least one time more (i.e., once more wound) than the positive and negative electrodes. When the separator is once more wound, the separator may have additional adherence to the parts where the separator is once more wound due to adherence of the separator itself during the heat pressure event of the oriented polystyrene film. Accordingly, the electrode assembly in which the separator is once more wound may have enhanced close-contacting force with the pouch case and thus, be prevented from moving too much in the pouch case. In this way, the electrode assembly may not only stably maintain a jelly-roll shape but also have minimized or reduced movement in the pouch case due to the oriented polystyrene film attached to outside of the electrode assembly in which the separator is once more wound.

In some the jelly-roll electrode assembly is wound so that the separator forms the outer surface of the electrode assembly, with the oriented polystyrene film formed on this outer surface.

When a battery is overcharged or allowed to stand at a high temperature, gas is generated as pressure and temperature of the battery are increased and thus, the gas should be discharged to prevent expansion and explosion of the battery.

Herein, the separator according to one embodiment has adherence and may play a role of a finish material. Accordingly, the electrode assembly in the pouch case may be prevented from movement.

The polymer constituting the coating layer may include a polyvinylidene fluoride-based polymer, an acryl-based polymer, polymethylmethacrylate (PMMA), an aramid resin, a polyamideimide resin, a polyimide resin, or a combination thereof.

Examples of the polyvinylidene fluoride-based polymer may include polyvinylidene fluoride (PVdF), a polyvinylidene fluoride-hexafluoropropylene (PVdF-HFP) copolymer, and a combination thereof.

The ceramic may include Al₂O₃, MgO, TiO₂, Al(OH)₃, Mg(OH)₂, Ti(OH)₄, or a combination thereof.

The coating layer may have a thickness of about 0.1 µm to about 6 µm, and specifically about 2 µm to about 4 µm. When the coating layer has a thickness within the range, the electrode assembly may have adherence that is so strong as to prevent its movement in a pouch case as well as maintain its jelly-roll shape against an external impact such as a battery fall.

The positive electrode constituting the electrode assembly includes a current collector and a positive active material layer formed on the current collector. The positive active material layer may include a positive active material, a binder, and a conductive material.

The positive current collector may be Al (aluminum) but is not limited thereto.

The positive active material includes lithiated intercalation compounds that reversibly intercalate and deintercalate lithium ions. The positive active material may include a composite oxide including at least one of cobalt, manganese, nickel, or a combination thereof as well as lithium and specific examples may be the following compounds:
LiₐA_{1-b}B_{b}D₂ (0.90 ≤ a ≤ 1.8 and 0 ≤ b ≤ 0.5); LiₐE_{1-b}B_{b}O_{2-c}D_{c} (0.90 ≤ a ≤ 1.8, 0 ≤ b ≤ 0.5, 0 ≤ c ≤ 0.05); LiₐE_{2-b}B_{b}O_{4-c}D_{c} (0.90 ≤ a ≤ 1.8, 0 ≤ b ≤ 0.5, 0 ≤ c ≤ 0.05); LiₐNi_{1-b-c}Co_{b}B_{c}D_{α} (0.90 ≤ a ≤ 1.8, 0 ≤ b ≤ 0.5, 0 ≤ c ≤ 0.05, 0 < α ≤ 2); LiₐNi_{1-b-c}Co_{b}B_{c}O_{2-α}F'_{α} (0.90 ≤ a ≤ 1.8, 0 ≤ b ≤ 0.5, 0 ≤ c ≤ 0.05, 0 < α < 2); LiₐNi_{1-b-c}Co_{b}B_{c}O₂₋ₐF'₂ (0.90 ≤ a ≤ 1.8, 0 ≤ b ≤ 0.5, 0 ≤ c ≤ 0.05, 0 < α < 2); LiₐNi_{1-b-c}Mn_{b}B_{c}D_{α} (0.90 ≤ a ≤ 1.8, 0 ≤ b ≤ 0.5, 0 ≤ c ≤ 0.05, 0 < α ≤ 2); LiₐNi_{1-b-c}Mn_{b}B_{c}O_{2-α}F'_{α} (0.90 ≤ a ≤ 1.8, 0 ≤ b ≤ 0.5, 0 ≤ c ≤ 0.05, o < α < 2); LiₐNi_{1-b-c}Mn_{b}B_{c}O_{2-α}F'₂ (0.90 ≤ a ≤ 1.8, 0 ≤ b ≤ 0.5, 0 ≤ c ≤ 0.05, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);
LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMnG_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); QO₂; QS₂; LiQS₂; V₂O₅; LiV₂O₅; LiIO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the above chemical formulae, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The positive active material may include the positive active material with a coating layer, or a compound of the active material and the active material coated with the coating layer. The coating layer may include at least one coating element compound selected from an oxide of a coating element, a hydroxide of the coating element, an oxyhydroxide of the coating element, an oxycarbonate of the coating element, and a hydroxycarbonate of the coating element. The compound for the coating layer may be either amorphous or crystalline. The coating element included in the coating layer may be Mg, Al, Co, K, Na, Ca, Si, Ti, V, Sn, Ge, Ga, B, As, Zr, or a mixture thereof. The coating process may include any suitable processes as long as it does not cause any side effects on the properties of the positive active material (e.g., spray coating, immersing), which is well known to persons having ordinary skill in this art, so a detailed description thereof is omitted.

The binder improves binding properties of positive active material particles with one another and with a current collector and specific examples may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like, but are not limited thereto.

The conductive material improves conductivity of an electrode. Any electrically conductive material may be used as a conductive material, unless it causes a chemical change. Examples thereof may be natural graphite, artificial graphite, carbon black, acetylene black, ketjen black, a carbon fiber, a metal powder or a metal fiber including copper, nickel, aluminum, silver, and the like, and a polyphenylene derivative, which may be used singularly or as a mixture thereof.

The negative electrode constituting the electrode assembly includes a negative current collector and a negative active material layer formed on the negative current collector.

The negative current collector may include a copper foil.

The negative active material layer may include a negative active material, a binder, and optionally a conductive material.

The negative active material may include a material that reversibly intercalates/deintercalates lithium ions, a lithium metal, a lithium metal alloy, a material being capable of doping and dedoping lithium, or transition metal oxide.

The material that reversibly intercalates/deintercalates lithium ions includes a carbon material. The carbon material may be any generally-used carbon-based negative active material in a lithium ion rechargeable battery. Examples of the carbon material include crystalline carbon, amorphous carbon, and mixtures thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, or the like.

Examples of the lithium metal alloy include lithium and a metal selected from Na, K, Rb, Cs, Fr, Be, Mg, Ca, Sr, Si, Sb, Pb, In, Zn, Ba, Ra, Ge, Al, and Sn.

The material being capable of doping and dedoping lithium may include Si, SiOₓ(0 < x < 2), a Si-C composite, a Si-Y' alloy (wherein Y' is selected from an alkali metal, an alkaline-earth metal, Group 13 to Group 16 elements, a transition element, a rare earth element, and a combination thereof, and not Si), Sn, SnO₂, a Sn-C composite, a Sn-Y' alloy (wherein Y' is selected from an alkali metal, an alkaline-earth metal, Group 13 to Group 16 elements, a transition element, a rare earth element, and a combination thereof, and not Sn), and the like. At least one of these materials may be mixed with SiO₂. The element Y' may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may include vanadium oxide, lithium vanadium oxide, and the like.

The binder improves binding properties of negative active material particles with one another and with a current collector. The binder may include a non-water-soluble binder, a water-soluble binder, or a combination thereof.

Examples of the non-water-soluble binder include polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, and combinations thereof.

The water-soluble binder includes a styrene-butadiene rubber, an acrylated styrene-butadiene rubber, polyvinyl alcohol, sodium polyacrylate, a copolymer including propylene and a C2 to C8 olefin, a copolymer of (meth)acrylic acid and (meth)acrylic acid alkyl ester, or a combination thereof.

When the water-soluble binder is used as a negative electrode binder, a cellulose-based compound may be further used to provide viscosity. The cellulose-based compound includes one or more of carboxylmethyl cellulose, hydroxypropylmethyl cellulose, methyl cellulose, or alkaline metal salts thereof. The alkaline metal may be sodium (Na), potassium (K), or lithium (Li). The cellulose-based compound may be included in an amount of 0.1 parts by weight to 3 parts by weight based on 100 parts by weight of the negative active material.

The negative electrode and the positive electrode may be manufactured by a method including mixing an active material, a conductive material, and a binder in a solvent into an active material composition and coating the composition on a current collector.

The electrode manufacturing method is well known, and thus is not described in more detail in the present specification. The solvent includes N-methylpyrrolidone or the like, but is not limited thereto.

The electrolyte may be injected into the pouch case housing the electrode assembly. In one embodiment, the electrolyte may be an electrolyte solution or a polymer electrolyte.

The electrolyte may include alkyl propionate. The alkyl propionate has excellent compatibility with a polymer of a coating layer on the separator and may impregnate the electrode assembly. Accordingly, a lithium pouch battery having excellent overcharge characteristics (i.e., desired characteristics during an overcharge) may be realized.

The alkyl of the alkyl propionate may be a C1 to C10 alkyl, and specifically C1 to C5 alkyl.

The alkyl propionate may be specifically selected from methyl propionate, ethyl propionate, and a combination thereof. These materials have low viscosity and thus, good or excellent compatibility with the polymer of the coating layer on the separator and thus, may improve cycle-life characteristics of a battery during the overcharge.

The alkyl propionate may be included in an amount of about 10 volume% to about 70 volume%, specifically about 20 volume% to about 70 volume%, and more specifically about 40 volume% to about 60 volume% based on total amount of the electrolyte. When the alkyl propionate is added to the electrolyte within the amount range, a lithium pouch battery may have excellent overcharge characteristics.

The electrolyte may include a mixture of a lithium salt and a non-aqueous organic solvent other than the alkyl propionate.

The lithium salt is dissolved in the non-aqueous organic solvent, supplies lithium ions in the battery, operates a basic operation of a rechargeable lithium battery, and improves lithium ion transportation between positive and negative electrodes.

The lithium salt may include one selected from LiPF₆, LiBF₄, LiSbF₆, LiAsF₆, LiN (SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) wherein, x and y are natural numbers, LiCl, LiI, LiB(C₂O₄)₂ (lithium bis(oxalato) borate, LiBOB), and a combination thereof.

The concentration of the lithium salt may range from about 0.1M to about 2.0M. When the lithium salt is included at the above concentration range, the electrolyte has an appropriate conductivity and viscosity and thus improved electrolyte performance and may transfer lithium ions effectively.

The non-aqueous organic solvent serves as a medium for transferring ions taking part in the electrochemical reaction of a battery. The non-aqueous organic solvent may include one selected from a carbonate-based solvent, an ester-based solvent, an ether-based solvent, a ketone-based solvent, an alcohol-based solvent, an aprotic solvent, and a combination thereof.

The carbonate-based solvent may include, for example dimethyl carbonate (DMC), diethyl carbonate (DEC), dipropyl carbonate (DPC), methylpropyl carbonate (MPC), ethylpropyl carbonate (EPC), methylethyl carbonate (MEC), thylene carbonate (EC), propylene carbonate (PC), butylene carbonate (BC), or the like.

Specifically, the chain carbonate compound and the cyclic carbonate compound may be used as a mixture to provide a solvent having a low viscosity and an increased permittivity. Herein, the cyclic carbonate compound and the chain carbonate compound may be mixed in a volume ratio of about 1:1 to about 1:9.

The carbonate-based solvent and the above-described alkyl propionate are mixed in a volume ratio of about 4:6 to about 6:6. When carbonate-based solvent and the above-described alkyl propionate are mixed within the volume ratio range, a lithium pouch battery having excellent cycle-life characteristics during the overcharge is realized.

The ester-based solvent may include, for example, methylacetate, ethylacetate, n-propylacetate, dimethylacetate, γ-butyrolactone, decanolide, valerolactone, mevalonolactone, caprolactone, or the like.

The ether-based solvent may include, for example, dibutylether, tetraglyme, diglyme, dimethoxyethane, 2-methyltetrahydrofuran, tetrahydrofuran, or the like.
The ketone-based solvent may include cyclohexanone, or the like.

The alcohol-based solvent may include ethanol, isopropyl alcohol, or the like.

The non-aqueous organic solvent may be used singularly or in a mixture. When the organic solvent is used in a mixture, the mixture ratio may be controlled in accordance with a desirable battery performance.

The electrolyte may further include an overcharge inhibitor such as ethylenecarbonate, pyrocarbonate, or the like as an additive.

Hereinafter, the embodiments are illustrated in more detail with reference to examples. However, the present disclosure is illustrated in more detail with reference to examples.

Furthermore, what is not described in this disclosure may be sufficiently understood by those who have knowledge in this field and will not be illustrated here.

### Example 1

A positive active material layer composition was prepared by respectively mixing LiCoO₂, polyvinylidene fluoride (PVdF), and carbon black in a weight ratio of 97:1.5:1.5 and by dispersing the mixture into N-methyl-2-pyrrolidone. The positive active material layer composition was coated on a 12 µm-thick aluminum foil and then, dried and compressed, thereby manufacturing a positive electrode.

A negative active material layer composition was prepared by mixing graphite and a styrene-butadiene rubber in a weight ratio of 98:2 and by dispersing the mixture into water. The negative active material layer composition was coated on an 8 µm-thick copper foil and then, dried and compressed, thereby manufacturing a negative electrode.

An electrolyte was prepared by mixing ethylene carbonate (EC), propylene carbonate (PC), and ethyl propionate (EP) in a volume ratio of 3:1:6 to prepare a mixed solvent and by dissolving LiPF₆ in a concentration of 1.1M.

A separator was manufactured by preparing a coating layer composition including polyvinylidene fluoride (PVdF) and N-methylpyrrolidone and by coating the coating layer composition on one surface of a polyethylene substrate to form a 3 µm-thick coating layer.

The positive and negative electrodes and the separator were spirally wound into a jelly-roll-shaped electrode assembly. The electrode assembly was fabricated by winding the separator at least one time more than the positive and negative electrodes. Also, on only one of the external sides of the electrode assembly, an oriented polystyrene film was attached with another side of the electrode assembly open. The oriented polystyrene film had adhesion strength of 5.22kgf/cm² and an elongation rate of 319%.

The electrode assembly finished with the oriented polystyrene film was housed in a pouch case, the electrolyte was injected into the pouch case, and the pouch case was sealed, thereby manufacturing a lithium pouch battery cell. Here, a protective circuit (PCM) and a thermal fuse may then be welded to the lithium pouch battery cell, and the product was housed in a stainless steel (SUS) case, to thereby manufacture a pack.

### Comparative Example 1

A positive active material layer composition was prepared by respectively mixing LiCoO₂, polyvinylidene fluoride (PVdF), and carbon black in a weight ratio of 97:1.5:1.5 and by dispersing the mixture into N-methyl-2-pyrrolidone. The positive active material layer composition was coated on a 12 µm-thick aluminum foil and then, dried and compressed, thereby manufacturing a positive electrode.

A negative active material layer composition was prepared by mixing graphite and a styrene-butadiene rubber in a weight ratio of 98:2 and by dispersing the mixture into water. The negative active material layer composition was coated on an 8 µm-thick copper foil and then, dried and compressed, thereby manufacturing a negative electrode.

An electrolyte was prepared by mixing ethylene carbonate (EC), propylene carbonate (PC), and ethyl propionate (EP) in a volume ratio of 3:1:6 to prepare a mixed solution and by dissolving LiPF₆ in a concentration of 1.1M.

The positive and negative electrodes and a polyethylene separator were spirally wound into a jelly-roll-shaped electrode assembly. The electrode assembly was fabricated by winding the separator at least one time more than the positive and negative electrodes. The electrode assembly was housed in a pouch case, the electrolyte was injected into the pouch case, and the pouch case was sealed, thereby manufacturing a lithium pouch battery cell. Here, a protective circuit (PCM) and a thermal fuse device may then be welded to the lithium pouch battery cell, and the product was housed in a stainless steel (SUS) case, to thereby manufacture a pack.

### Evaluation 1: Fall Characteristics of Lithium Pouch-type Battery Cell (Pack)

The lithium pouch battery cells (packs) according to Example 1 and Comparative Example 1 were respectively housed in each case made of about 140 g of acetal, and the cases were tightened from the top to bottom with a screw. Then, the packs were each dropped 50 times (random and free fall) from a height of 1m, and then exothermic events (times) of the packs due to an internal short-circuit were counted. The packs were examined if the packs were exothermic by separating a case at every 50 times, and the number of the random free falls in which the packs were exothermic was provided in the following Table 1.

**Table 1**

| | Comparative Example 1 | Example 1 |
|---|---|---|
| pack #1 | 50 times | 500 times |
| pack #2 | 50 times | 500 times |
| pack #3 | 100 times | 500 times |
| pack #4 | 100 times | 350 times |
| pack #5 | 250 times | 500 times |

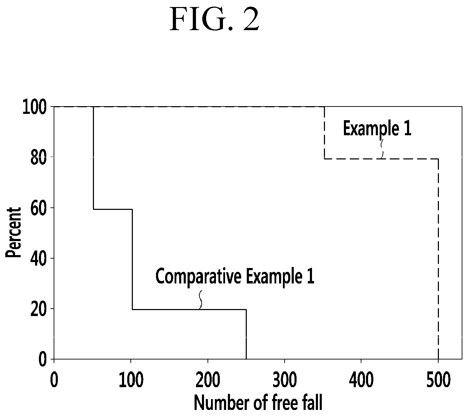

Referring to Table 1, the lithium pouch battery cell including a separator including a coating layer and an OPS film according to Example 1 showed excellent fall characteristics (i.e., desired characteristics after a fall) compared with the lithium pouch battery cell according to Comparative Example 1 so that it may be expected that the cell according to Example 1 exhibits more stability against an external impact than that according to Comparative Example 1
In addition, nonparametric survival of the lithium pouch battery cells according to Example 1 and Comparative Example 1 was analyzed and measured, and then, the results are provided in FIG. 2.

FIG. 2 is a nonparametric survival plot showing free fall results of the lithium pouch battery cells according to Example 1 and Comparative Example 1.

Referring to FIG. 2, the lithium pouch battery cells according to Comparative Example 1 were exothermic at the average free fall of 110 times, and the lithium pouch battery cell according to Example 1 were exothermic at the average free fall of 470 times, showing remarkably improved fall characteristic.
As discussed, embodiments of the invention provide a lithium pouch battery, comprising: an electrode assembly including a positive electrode, a negative electrode, and a separator between the positive electrode and the negative electrode; and an oriented polystyrene, OPS, film attached to at least one external side of the electrode assembly, wherein: the separator comprises a porous substrate and a coating layer on at least one side of the porous substrate, and the coating layer comprises a polymer, a ceramic, or a combination thereof.

In some embodiments, the oriented polystyrene film is attached to the one external side of the electrode assembly with another external side thereof being open. In such embodiments, the open external side can be free from oriented polystyrene film.

In some embodiments, the electrode assembly has a jelly-roll shape formed by sequentially winding the positive electrode, the separator, and the negative electrode, and the separator is wound at least one time more than the positive and negative electrode.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims, and equivalents thereof.

## Claims

1. A lithium pouch battery (100), comprising:
an electrode assembly (10) including a positive electrode, a negative electrode, and a separator between the positive electrode and the negative electrode; and
an oriented polystyrene, OPS, film (15) attached to at least one external side of the electrode assembly,
wherein:
the separator comprises a porous substrate and a coating layer on at least one side of the porous substrate, and
the coating layer comprises a polymer, a ceramic, or a combination thereof, and
the electrode assembly (10) has a jelly-roll shape formed by sequentially winding the positive electrode, the separator, and the negative electrode, and the separator is wound at least one time more than the positive and negative electrode.

2. The lithium pouch battery (100) of claim 1, wherein the oriented polystyrene film (15) is attached to the one external side of the electrode assembly (10) with another external side thereof being open.

3. The lithium pouch battery (100) of claim 1 or claim 2, wherein the oriented polystyrene film (15) has stronger outer adherence than inner adherence.

4. The lithium pouch battery (100) of any one of claims 1 to 3, wherein the oriented polystyrene film has adhesion strength of about 0.5 kgf/cm² to about 8 kgf/cm².

5. The lithium pouch battery (100) of any one of claims 1 to 5, wherein the oriented polystyrene film has an elongation percentage of about 10% to about 400%.

6. The lithium pouch battery (100) of any one of claims 1 to 5, wherein the polymer comprises a polyvinylidene fluoride-based polymer, an acryl-based polymer, polymethylmethacrylate (PMMA), an aramid resin, a polyamideimide resin, a polyimide resin, or a combination thereof;
optionally wherein the polyvinylidene fluoride-based polymer comprises polyvinylidene fluoride (PVdF), a polyvinylidene fluoride-hexafluoropropylene (PVdF-HFP) copolymer, or a combination thereof.

7. The lithium pouch battery (100) of any one of claims 1 to 6, wherein the ceramic comprises Al₂O₃, MgO, TiO₂, Al(OH)₃, Mg(OH)₂, Ti(OH)₄, or a combination thereof.

8. The lithium pouch battery (100) of any one of claims 1 to 7, wherein the coating layer has a thickness of about 0.1 µm to about 6 µm.

9. The lithium pouch battery (100) of any one of claims 1 to 8, further comprising:
a pouch case (20) housing the electrode assembly (10); and
an electrolyte injected into the pouch case;
optionally wherein the electrolyte comprises C1 to C10 alkyl propionate.

10. A method of forming a lithium pouch battery (100), the method comprising:
forming an electrode assembly (10) to include a positive electrode, a negative electrode, and a separator between the positive electrode and the negative electrode; and
attaching an oriented polystyrene, OPS, film to at least one external side of the electrode assembly,
wherein:
the separator comprises a porous substrate and a coating layer formed on at least one side of the porous substrate,
the coating layer comprises a polymer, a ceramic, or a combination thereof, and the forming of the electrode assembly (10) comprises sequentially winding the positive electrode, the separator, and the negative electrode to have a jelly-role shape, and winding the separator at least one time more than the positive and negative electrode

11. The method of claim 10, wherein the attaching of the oriented polystyrene film comprises attaching the oriented polystyrene film to the one external side of the electrode assembly (10) with another external side thereof being open.

12. The method of claim 10 or 11, further comprising
housing the electrode assembly (10) in a pouch case (20); and
injecting an electrolyte into the pouch case.

13. The method of any one of claims 10 to 12, wherein the oriented polystyrene film has stronger outer adherence than inner adherence; and/or
wherein the oriented polystyrene film has an adhesion strength of about 0.5 kgf/cm² to about 8 kgf/cm²; and/or
wherein the oriented polystyrene film has an elongation percentage of about 10% to about 400%; and/or
wherein the polymer comprises a polyvinylidene fluoride-based polymer, an acryl-based polymer, polymethylmethacrylate (PMMA), an aramid resin, a polyamideimide resin, a polyimide resin, or a combination thereof.

## Patentansprüche

1. Lithiumbeutelbatterie (100), umfassend:
eine Elektrodenanordnung (10), die eine positive Elektrode, eine negative Elektrode und einen Separator zwischen der positiven Elektrode und der negativen Elektrode umfasst; und
eine Folie (15) aus orientiertem Polystyrol, OPS, die an wenigstens einer Außenseite der Elektrodenanordnung angebracht ist,
wobei:
der Separator ein poröses Substrat und eine Beschichtungsschicht auf wenigstens einer Seite des porösen Substrats umfasst und
die Beschichtungsschicht ein Polymer, eine Keramik oder eine Kombination derselben umfasst und
die Elektrodenanordnung (10) die Form einer Biskuitrolle aufweist, die durch aufeinanderfolgendes Aufwickeln der positiven Elektrode, des Separators und der negativen Elektrode ausgebildet ist, und der Separator wenigstens einmal mehr aufgewickelt ist als die positive und negative Elektrode.

2. Lithiumbeutelbatterie (100) nach Anspruch 1, wobei die Folie (15) aus orientiertem Polystyrol an der einen Außenseite der Elektrodenanordnung (10) angebracht ist, wobei eine andere Außenseite derselben offen ist.

3. Lithiumbeutelbatterie (100) nach Anspruch 1 oder Anspruch 2, wobei die Folie (15) aus orientiertem Polystyrol ein stärkeres äußeres Haftvermögen als inneres Haftvermögen aufweist.

4. Lithium-Folienbatterie (100) nach einem der Ansprüche 1 bis 3, wobei die Folie aus orientiertem Polystyrol eine Haftfestigkeit von ca. 0,5 kgf/cm² bis ca. 8 kgf/cm² aufweist.

5. Lithiumbeutelbatterie (100) nach einem der Ansprüche 1 bis 5, wobei die Folie aus orientiertem Polystyrol einen Dehnungsprozentwert von ca. 10 % bis ca. 400 % aufweist.

6. Lithiumbeutelbatterie (100) nach einem der Ansprüche 1 bis 5, wobei das Polymer ein polyvinylidenfluoridbasiertes Polymer, ein acrylbasiertes Polymer, Polymethylmethacrylat (PMMA), ein Aramidharz, ein Polyamidimidharz, ein Polyimidharz oder eine Kombination derselben umfasst;
wobei optional das polyvinylidenfluoridbasierte Polymer Polyvinylidenfluorid (PVdF), ein Polyvinylidenfluorid-Hexafluorpropylen-Copolymer (PVdF-HFP) oder eine Kombination derselben umfasst.

7. Lithiumbeutelbatterie (100) nach einem der Ansprüche 1 bis 6, wobei die Keramik Al₂O₃, MgO, TiO₂, Al(OH)₃, Mg(OH)₂, Ti(OH)₄ oder eine Kombination derselben umfasst.

8. Lithiumbeutelbatterie (100) nach einem der Ansprüche 1 bis 7, wobei die Beschichtungsschicht eine Dicke von ca. 0,1 µm bis ca. 6 µm aufweist.

9. Lithiumbeutelbatterie (100) nach einem der Ansprüche 1 bis 8, weiterhin umfassend:
eine Folienhülle (20), welche die Elektrodenanordnung (10) aufnimmt; und
einen Elektrolyten, der in die Folienhülle injiziert ist;
wobei der Elektrolyt optional C1- bis C10-Alkylpropionat umfasst.

10. Verfahren zum Ausbilden einer Lithiumbeutelbatterie (100), wobei das Verfahren umfasst:
Ausbilden einer Elektrodenanordnung (10), so dass diese eine positive Elektrode, eine negative Elektrode und einen Separator zwischen der positiven Elektrode und der negativen Elektrode umfasst; und
Anbringen eine Folie aus orientiertem Polystyrol, OPS, an wenigstens einer Außenseite der Elektrodenanordnung,
wobei:
der Separator ein poröses Substrat und eine auf wenigstens einer Seite des porösen Substrats ausgebildete Beschichtungsschicht umfasst und
die Beschichtungsschicht ein Polymer, eine Keramik oder eine Kombination derselben umfasst und das Ausbilden der Elektrodenanordnung (10) ein aufeinanderfolgendes Aufwickeln der positiven Elektrode, des Separators und der negativen Elektrode, so dass diese die Form einer Biskuitrolle aufweisen, und ein Aufwickeln des Separators wenigstens einmal mehr als die positive und negative Elektrode umfasst.

11. Verfahren nach Anspruch 10, wobei das Anbringen der Folie aus orientiertem Polystyrol ein Anbringen der Folie aus orientiertem Polystyrol an der einen Außenseite der Elektrodenanordnung (10) umfasst, wobei eine andere Außenseite derselben offen ist.

12. Verfahren nach Anspruch 10 oder 11, weiterhin umfassend:
Unterbringen der Elektrodenanordnung (10) in einer Folienhülle (20); und
Injizieren eines Elektrolyten in die Folienhülle.

13. Verfahren nach einem der Ansprüche 10 bis 12, wobei die Folie aus orientiertem Polystyrol ein stärkeres äußeres Haftvermögen als inneres Haftvermögen aufweist; und/oder
wobei die Folie aus orientiertem Polystyrol eine Haftfestigkeit von ca. 0,5 kgf/cm² bis ca. 8 kgf/cm² aufweist; und/oder
wobei die Folie aus orientiertem Polystyrol einen Dehnungsprozentwert von ca. 10 % bis ca. 400 % aufweist; und/oder
wobei das Polymer ein polyvinylidenfluoridbasiertes Polymer, ein acrylbasiertes Polymer, Polymethylmethacrylat (PMMA), ein Aramidharz, ein Polyamidimidharz, ein Polyimidharz oder eine Kombination derselben umfasst.

## Revendications

1. Batterie à poche au lithium (100), comprenant :
un assemblage d'électrodes (10) comprenant une électrode positive, une électrode négative, et un séparateur entre l'électrode positive et l'électrode négative ; et
un film de polystyrène orienté, OPS, (15) fixé à au moins un côté extérieur de l'assemblage d'électrodes,
dans laquelle :
le séparateur comprend un substrat poreux et une couche de revêtement sur au moins un côté du substrat poreux, et
la couche de revêtement comprend un polymère, une matière céramique ou une de leurs associations, et
l'assemblage d'électrodes (10) a une forme de rouleau de gelée formé par enroulement séquentiel de l'électrode positive, du séparateur et de l'électrode négative, et le séparateur est enroulé au moins une fois de plus que l'électrode positive et l'électrode négative.

2. Batterie à poche au lithium (100) suivant la revendication 1, dans laquelle le film de polystyrène orienté (15) est fixé au côté extérieur de l'assemblage d'électrodes (10), un autre côté extérieur de celui-ci étant ouvert.

3. Batterie à poche au lithium (100) suivant la revendication 1 ou la revendication 2, dans laquelle le film de polystyrène orienté (15) a une adhérence extérieure plus forte que l'adhérence intérieure.

4. Batterie à poche au lithium (100) suivant l'une quelconque des revendications 1 à 3, dans laquelle le film de polystyrène orienté a une force d'adhérence d'environ 0,5 kgf/cm² à environ 8 kgf/cm².

5. Batterie à poche au lithium (100) suivant l'une quelconque des revendications 1 à 5, dans laquelle le film de polystyrène orienté a un pourcentage d'allongement d'environ 10 % à environ 400 %.

6. Batterie à poche au lithium (100) suivant l'une quelconque des revendications 1 à 5, dans laquelle le polymère comprend un polymère à base de poly(fluorure de vinylidène), un polymère à base acrylique, un poly-(méthacrylate de méthyle) (PMMA), une résine d'aramide, une résine de polyamideimide, une résine de polyimine ou une de leurs associations ;
facultativement dans laquelle le polymère à base de poly(fluorure de vinylidène) comprend le poly(fluorure de vinylidène) (PVdF), un copolymère poly(fluorure de vinylidène)-hexafluoropropylène (PVdF-HFP) ou une de leurs associations.

7. Batterie à poche au lithium (100) suivant l'une quelconque des revendications 1 à 6, dans laquelle la matière céramique comprend Al₂O₃, MgO, TiO₂, Al(OH)₃, Mg(OH)₂, Ti(OH)₄ ou de leurs associations.

8. Batterie à poche au lithium (100) suivant l'une quelconque des revendications 1 à 7, dans laquelle la couche de revêtement a une épaisseur d'environ 0,1 µm à environ 6 µm.

9. Batterie à poche au lithium (100) suivant l'une quelconque des revendications 1 à 8, comprenant en outre :
un boîtier de poche (20) renfermant l'assemblage d'électrodes (10) ; et
un électrolyte injecté dans le boîtier de poche ;
éventuellement dans laquelle l'électrolyte comprend un propionate d'alkyle en C₁ à C₁₀.

10. Procédé de formation d'une batterie à poche au lithium (100), le procédé comprenant :
la formation d'un assemblage d'électrodes (10) de manière à comprendre une électrode positive, une électrode négative et un séparateur entre l'électrode positive et l'électrode négative ;
la fixation d'un film de polystyrène orienté, OPS, à au moins un côté extérieur de l'assemblage d'électrodes,
dans lequel :
le séparateur comprend un substrat poreux et une couche de revêtement formée sur ledit au moins un côté du substrat poreux,
la couche de revêtement comprend un polymère, une matière céramique ou une de leurs associations,
la formation de l'assemblage d'électrodes (10) comprend l'enroulement séquentiel de l'électrode positive, du séparateur et de l'électrode négative de manière à obtenir une forme de rouleau de gelée, et l'enroulement du séparateur au moins une fois de plus que l'électrode positive et l'électrode négative.

11. Procédé suivant la revendication 10, dans lequel la fixation du film de polystyrène orienté comprend la fixation du film de polystyrène orienté à un côté extérieur de l'assemblage d'électrodes (10), un autre côté extérieur de celui-ci étant ouvert.

12. Procédé suivant la revendication 10 ou 11, comprenant en outre
l'incorporation de l'assemblage d'électrodes (10) à un boîtier de poche (20) ; et
l'injection d'un électrolyte dans le boîtier de poche.

13. Procédé suivant l'une quelconque des revendications 10 à 12, dans lequel le film de polystyrène orienté a une adhérence extérieure supérieure à l'adhérence intérieure, et/ou
dans lequel le film de polystyrène orienté a une force d'adhérence d'environ 0,5 kgf/cm2 à environ 8 kgf/cm² ; et/ou
dans lequel le film de polystyrène orienté a un pourcentage d'allongement d'environ 10 % à environ 400 % ; et/ou
dans lequel le polymère comprend un polymère à base de poly(fluorure de vinylidène), un polymère à base acrylique, un poly(méthacrylate de méthyle) (PMMA), une résine d'aramide, une résine de polyamideimide, une résine de polyimide ou une de leurs associations.
